Europäisches Patentamt

European Patent Office

Office européen des brevets

(19)

(11) Numéro de publication : **0 168 275**
**B1**

(12)

# FASCICULE DE BREVET EUROPÉEN

(45) Date de publication du fascicule du brevet :
17.08.88

(21) Numéro de dépôt : 85401048.5

(22) Date de dépôt : 28.05.85

(51) Int. Cl.⁴ : **A 01 K   1/12**

(54) **Stalle de traite et d'alimentation.**

(30) Priorité : 04.06.84 FR 8408733

(43) Date de publication de la demande :
15.01.86 Bulletin 86/03

(45) Mention de la délivrance du brevet :
17.08.88 Bulletin 88/33

(84) Etats contractants désignés :
**AT BE CH DE GB IT LI LU NL SE**

(56) Documents cités :
**AU-B-    425 608**
**BE-A-    886 017**
**FR-A- 1 535 909**
**FR-A- 2 423 149**

(73) Titulaire : **R.J. Fullwood & Bland Ltd.**
**Ellesmere Salop, SY12 9DG (GB)**

(72) Inventeur : **Daffini, Jean-Pierre**
**Lotissement Saint-Joseph Druelle**
**F-12850 Onet Le Chateau 4 Saisons (FR)**
Inventeur : **Tisserand, Philippe**
**81 rue Vieille du Temple**
**F-75003 Paris (FR)**

(74) Mandataire : **Polus, Camille et al**
**c/o Cabinet Lavoix 2, Place d'Estienne d'Orves**
**F-75441 Paris Cedex 09 (FR)**

## Description

Il est bien connu que les bêtes doivent être alimentées pendant la traite. En conséquence les stalles de traite destinées aux brebis, ou autres sont généralement des stalles linéaires dans lesquelles les bêtes sont disposées côte à côte, un transporteur se déplaçant devant elles pour leur amener de la nourriture en continu.

On constate toutefois que ce mode d'alimentation pose des problèmes importants car le déplacement de la nourriture gêne certaines des bêtes, tandis que la quantité d'aliment qui leur est présentée est irrégulière puisque fonction du prélèvement de celles qui les précèdent.

Il existe également des installations qui comportent un tapis roulant ou un plancher articulé sans fin, entraîné par des rouleaux pour déplacer les bêtes pendant la traite, en même temps que les appareils de traite, ainsi que décrit dans le FR-A-1.535.909 et le FR-A-2.423.149.

D'après le FR-A-2.423.149, le plancher articulé porte des dispositifs de contention comportant une ouverture dans laquelle la tête de l'animal est emprisonnée, et on prévoit des mangeoires et un système de cames commandant notamment le verrouillage et le déverrouillage des dispositifs de contention et l'alimentation des mangeoires. Le problème du déplacement relatif des bêtes et de la nourriture peut être supprimé mais la quantité d'aliment présentée reste irrégulière et fonction du prélèvement précédent, tandis que l'ensemble de l'installation est complexe.

La présente invention a donc pour but de remédier à ces inconvénients en fournissant une stalle dans laquelle les bêtes sont immobilisées par rapport à l'aliment qui leur est présenté, en même temps que par rapport au dispositif de traite, et reçoivent toujours une dose d'aliment bien déterminée, et dont la réalisation est particulièrement simple.

Cette invention a en effet pour objet une stalle de traite et d'alimentation selon le préambule de la revendication 1, qui comporte les caractéristiques mentionnées dans la partie caractérisante de la revendication 1.

Dans une telle stalle chaque bête arrivant sur le plancher accède ainsi facilement à l'auge la plus proche de l'entrée en faisant avec sa tête basculer l'organe de fermeture, est retenue par ce dernier pendant tout le parcours horizontal du plancher articulé, puis est libérée automatiquement du seul fait du basculement du plancher et de la plaque verticale autour du rouleau, basculement qui entraîne également celui de l'auge.

Les auges et les cornadis sont ainsi renversés lorsqu'ils passent sous le châssis, de sorte que tout aliment restant dans les auges est vidé et que chaque bête reçoit une dose nouvelle qui peut être bien déterminée.

Il est toujours possible cependant à l'éleveur de faire basculer à nouveau cet organe et de dégager la bête en un point intermédiaire.

La description ci-dessous d'un mode de réalisation donné à titre d'exemple non limitatif, et représenté aux dessins annexés, fera d'ailleurs ressortir les avantages et caractéristiques de l'invention.

Sur ces dessins :
- la Fig. 1 est une vue schématique en élévation d'une stalle de traite selon l'invention ;
- la Fig. 2 est une vue en plan, selon la ligne 2-2 de la figure 1.

Comme le montrent ces dessins, une stalle de traite linéaire selon l'invention comporte un châssis 1, qui peut être simplement posé sur le sol ou éventuellement être muni de roues de façon à être mobile. Ce châssis 1 supporte à chacune de ses extrémités un rouleau, respectivement 2 et 4, et un plancher articulé sans fin, 6, passe sur ces deux rouleaux en étant entraîné par le rouleau 4 qui est relié, par une transmission à chaîne 8, à un moteur 9 porté par le châssis 1. De préférence, le châssis 1 supporte également une sole plate et horizontale 10 sur laquelle glisse le plancher articulé 6 lors de son déplacement horizontal sous l'action du rouleau d'entraînement 4.

Le plancher articulé 6 comporte à intervalles réguliers des traverses 12 qui portent chacune, à l'une de leurs extrémités, une plaque verticale 14 formant cornadis. Sur sa face opposée à la traverse 12, la plaque 14 porte une auge 16 en saillie latérale. Chaque auge 16 se prolonge en effet, comme le montrent les dessins, dans l'espace qui sépare les deux plaques adjacentes 14 et légèrement derrière la plaque voisine. Par suite, chaque auge 16 ferme l'espace 18 entre les deux plaques 14 et est accessible par cet espace 18.

Un couloir d'entrée 24 est monté à proximité de l'une des extrémités de la sole 10 (à l'extrémité de gauche dans le cas du dessin) et une cloison 26, qui prolonge ce couloir 24 au-dessus du plancher articulé, se termine par un flanc 28, parallèle aux traverses 12, qui guide la bête en direction de l'auge 16.

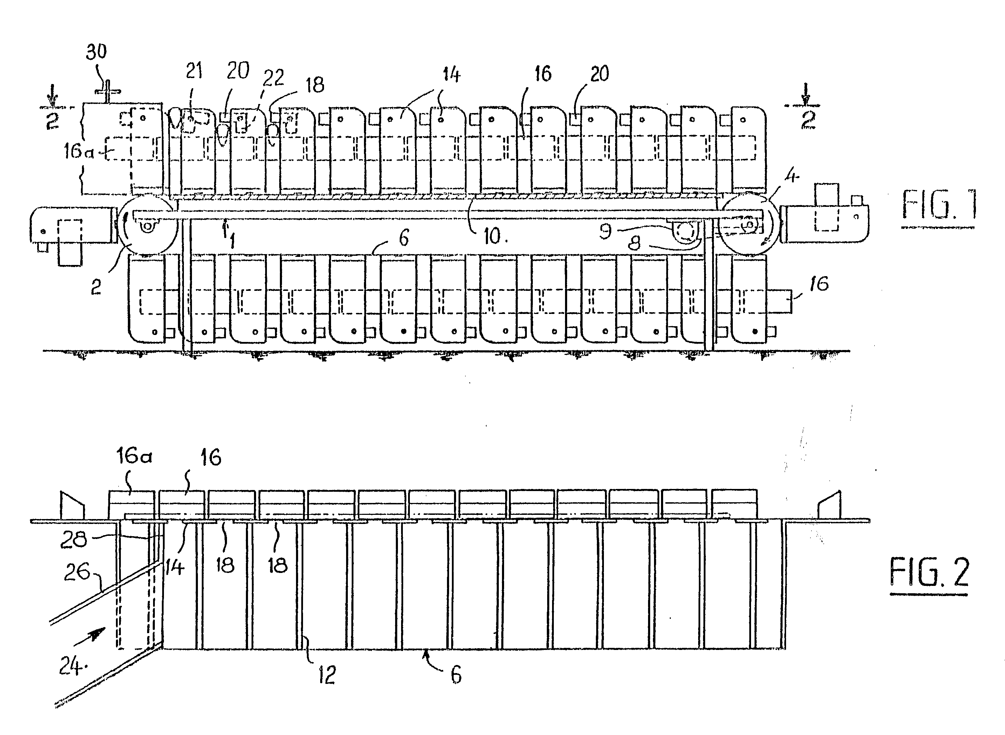

A l'extérieur du plancher articulé 6, et au-dessus des auges 16, est monté un distributeur d'aliment, simplement indiqué schématiquement en 30 sur la figure 1, qui assure le remplissage de l'auge 16a portée par la plaque 14 masquée par la cloison 28, c'est-à-dire la première auge de la partie supérieure horizontale du plancher 6.

Bien entendu, des dispositifs de traite de tout type approprié sont également montés sur le plancher articulé, dans chacun des espaces délimités par les traverses 12.

Par ailleurs, des moyens de guidage des bêtes quittant la stalle peuvent être prévus à l'extrémité du plancher articulé opposée à l'entrée 24. Ces moyens étant connus n'ont pas été représentés pour ne pas compliquer les dessins.

Chaque espace 18 est fermé par une barre 20 qui est montée pivotante à la partie supérieure du cornadis 14 et fait saillie latéralement, du même côté que l'auge 16. Dans le mode de réalisation représenté, la barre 20 est solidaire d'un bras 22, qui lui est sensiblement perpendiculaire, et est ainsi montée en bascule sur le cornadis 14. Une butée est toutefois prévue au-dessus de l'organe de fermeture ainsi constitué, pour interdire de façon sûre le soulèvement de la barre 20 au-delà de sa position horizontale de fermeture.

De préférence, l'organe de fermeture est monté à l'intérieur du cornadis 14 lui-même, qui est au moins partiellement creux, et le bord supérieur de ce cornadis joue le rôle de la butée supérieure.

Lors d'une traite, les brebis par exemple sont amenées par le couloir 24 et guidées une à une par la cloison 26 vers le premier espace 18 et la première auge 16. La position horizontale de la barre 20 étant légèrement plus basse que la hauteur normale de la tête d'une brebis, la bête peut passer la tête au-dessus de la barre 20 et en cherchant à atteindre l'auge 16, elle repousse cette barre 20 vers le bas, ce qui la fait basculer autour de l'axe d'articulation 21, comme le montre la figure 1. Lorsque la bête a atteint l'auge, la barre 20 est libérée et le bras 22 fait basculer l'organe de fermeture dans l'autre sens, ramène la barre 20 en position horizontale, au-dessus de la tête de la bête, et l'applique contre la butée supérieure.

La bête est immobilisée et ne peut plus ni redresser la tête ni quitter l'auge. Le dispositif de traite est alors mis en place et le plancher articulé entraîné par le rouleau 4 déplace à la fois la brebis installée, le cornadis correspondant 14, l'auge 16, et ce dispositif de traite sur tout le parcours horizontal de sa partie supérieure, jusqu'au voisinage du rouleau 4.

A ce moment, le basculement du cornadis autour du rouleau 4 entraîne celui de la barre 20 et libère la bête qui peut quitter la stalle.

Il sera évident pour l'homme de l'art qu'un dispositif de décrochage automatique de l'appareil de traite peut être prévu à cette extrémité du plancher articulé, de sorte que la bête traite puisse quitter la stalle sans difficulté.

Il apparaît également que la barre 20 faisant saillie dans l'espace 18, au-dessus de la tête de la bête, est toujours accessible depuis l'extérieur. Il est donc possible à tout moment d'exercer volontairement un effort sur elle et de provoquer son basculement vers le bas pour libérer une bête en un point intermédiaire du parcours, sans attendre le basculement du cornadis 14.

A la fin de leur parcours horizontal supérieur les cornadis 14, qui arrivent à l'extrémité de droite de la stalle, basculent autour du rouleau 4 puis sont entraînés le long de la trajectoire horizontale inférieure du plancher sans fin. Pendant tout ce trajet, les auges 16 qu'ils portent sont renversées et tout aliment restant est évacué et peut, éventuellement, être recueilli. A l'opposé, le pivotement autour du rouleau 2 redresse le cornadis 14 et l'auge 16 qui se présente en position horizontale normale sous le distributeur 30. Un réglage approprié de ce distributeur permet de fournir à chaque bête une dose d'aliment déterminée bien connue, qui éventuellement peut être adaptée à la bête particulière à laquelle elle est destinée.

Bien entendu, le moteur 9 peut permettre d'entraîner le plancher articulé en continu à une vitesse telle que le temps de passage sur la sole 10 correspond au temps nécessaire pour la traite.

En variante, l'entraînement par le moteur 9 peut être effectué de manière alternative, un certain nombre de bêtes étant mises en place le long du plancher articulé en mouvement, puis celui-ci arrêté pendant la traite, tandis que le déplacement du plancher 6 est à nouveau provoqué pour permettre la sortie des bêtes déjà traites.

Une telle stalle, qui peut être utilisée aussi bien à l'intérieur d'une étable qu'en plein air et facilite considérablement la traite en immobilisant les bêtes par rapport à leurs auges de nourriture, permet également de faciliter l'élevage des ovins, caprins, bovins ou autres par un rationnement individualisé de l'alimentation de chacun d'eux au cours de la traite, ou même indépendamment de celle-ci, et assure une grande sécurité en permettant à tout instant de libérer l'une ou l'autre des bêtes si cela est nécessaire.

**Revendications**

1. Stalle de traite et d'alimentation comportant un plancher articulé sans fin (6), monté sur des rouleaux d'extrémité ou de renvoi (2, 4) portés par un châssis et ayant deux parties horizontales superposées dont la partie supérieure se déplace entre une entrée (24) pour les bêtes à traire et une sortie pour les bêtes traites et qui porte sur l'un de ses côtés des moyens de contention, et un récipient d'alimentation d'un dispositif de traite pour les bêtes retenues sur le plancher, caractérisée en ce que ce plancher articulé (6) comporte des plaques verticales (14) formant cornadis qui sont fixées sur un côté du plancher (6), qui portent chacune d'une part sur sa face extérieure, une auge (16) décalée latéralement et faisant saillie en direction de la plaque suivante (14) et d'autre part, à sa partie supérieure au-dessus de l'auge, un organe (20) de fermeture du passage entre elle et la plaque suivante, qui peut être escamoté vers le bas pour permettre l'accès à l'auge mais est constamment rappelé en position de fermeture de manière à retenir la bête, et qui basculent avec le plancher autour des rouleaux de renvoi (4) de telle sorte que les auges (16) sont renversées et vidées pendant leur déplacement avec la partie inférieure du plancher.

2. Stalle suivant la revendication 1, caractérisée en ce que l'organe de fermeture est une barre (20) montée en bascule à la partie supérieure du cornadis (14) et faisant saillie latéralement du même côté que l'auge.

3. Stalle suivant l'une des revendications 1 et 2, caractérisée en ce que chaque cornadis (14) comporte une butée d'interdiction du soulèvement de l'organe de fermeture au-delà de sa position horizontale.

4. Stalle suivant la revendication 3, caractérisée en ce que l'organe de fermeture (20, 22) est monté à l'intérieur du cornadis (14), qui est creux, et bute en position horizontale contre la paroi supérieure de ce dernier.

5. Stalle suivant l'une des revendications 1 à 4, caractérisée en ce que la partie supérieure du plancher glisse sur une sole (10) plane, solidaire du châssis (1).

6. Stalle suivant l'une des revendications 1 à 5, caractérisée en ce que chaque plaque verticale (14) formant cornadis est fixée sur une traverse (12) solidaire du plancher articulé, et en ce que l'auge (16) qu'il porte se prolonge latéralement jusque derrière le cornadis adjacent.

7. Stalle suivant l'une des revendications 1 à 6, caractérisée en ce qu'une cloison transversale (26, 28) de guidage des bêtes à traire prolonge l'entrée (24).

8. Stalle suivant l'une des revendications 1 à 7, caractérisée en ce qu'un distributeur d'aliment (30) est monté en amont du plancher articulé, au-dessus de la première auge qui se représente en position horizontale normale.

**Claims**

1. Milking and feeding parlour comprising an endless articulated floor (6), mounted on end rollers or return rollers (2, 4) carried by a frame and having two superimposed horizontal sections, the upper section of which moves between an entrance (24) for the animals which are to be milked and an exit for the animals after milking, and which has, on one side, restraining means, and a feeding container of a milking apparatus for the animals which are retained on the floor, characterised in that this articulated floor (6) has vertical panels (14) forming partitions which are fixed to one side of the floor (6), and each of which carries, on the one hand, on its outer surface, a laterally offset trough (16) projecting towards the following panel (14) and, on the other hand, on its upper part above the trough, means (20) for closing off the passage between itself and the following panel, said means (20) being retractable downwards for giving access to the trough but being constantly biased into the closed position so as to retain the animal, said partitions pivoting with the floor about the return rollers (4) so that the troughs (16) are inverted and emptied during their displacement with the lower section of the floor.

2. Parlour according to claim 1, characterised in that the closure means is a bar (20) pivotably mounted on the upper part of the partition (14) and projecting laterally on the same side as the trough.

3. Parlour according to one of claims 1 and 2, characterised in that each partition (14) has a stop member preventing the closure means from being raised above its horizontal position.

4. Parlour according to claim 3, characterised in that the closure means (20, 22) is mounted inside the partition (14), which is hollow, and abuts in the horizontal position on the top wall of the latter.

5. Parlour according to one of claims 1 to 4, characterised in that the upper part of the floor slides over a planar base-plate (10) integral with the frame (1).

6. Parlour according to one of claims 1 to 5, characterised in that each vertical panel (14) forming a partition is fixed to a crosspiece (12) integral with the articulated floor, and the trough (16) which it carries extends laterally to just behind the adjacent partition.

7. Parlour according to one of claims 1 to 6, characterised in that the entrance (24) is extended by a transverse partition (26, 28) for guiding the animals which are to be milked.

8. Parlour according to one of claims 1 to 7, characterised in that a feed distributor (30) is mounted upstream of the articulated floor, above the first trough which resumes the normal horizontal position.

**Patentansprüche**

1. Melk- und Fütterungsstall mit einem endlosen beweglichen Boden (6), der auf End- oder Umkehrrollen (2, 4) befestigt ist, die von einem Gestell getragen werden und zwei übereinander liegende horizontale Teile haben, von denen der Oberteil sich zwischen einem Eingang (24) für die zu melkenden Tiere und einem Ausgang für die gemolkenen Tiere bewegt, und der an einer seiner Seiten Begrenzungsmittel trägt, und einen Fütterungsbehälter einer Melkvorrichtung für die auf dem Boden festgehaltenen Tiere, dadurch gekennzeichnet, daß der bewegliche Boden vertikale Platten (14) aufweist, welche Boxen bilden, die an einer Seite des Bodens (6) befestigt sind, die jeweils einerseits an ihrer Außenfläche einen Behälter (16) tragen, der seitlich verschoben ist und in Richtung auf die nachfolgende Platte (14) vorspringt, und andererseits an ihrem Oberteil oberhalb des Behälters ein Mittel (20) zum Verschluß des Durchgangs zwischen ihr und der nachfolgenden Platte, welche nach unten eingezogen werden kann, um den Zugang zum Behälter zu ermöglichen, aber fortwährend in die Verschlußposition zurückgezogen wird, um das Tier zurückzuhalten, und welche mit dem Boden um die Umkehrrollen (4) herum kippen, dergestalt, daß die Behälter (16) während ihrer Bewegung mit dem Unterteil des Bodens umgekehrt und entleert werden.

2. Stall nach Anspruch 1, dadurch gekennzeichnet, daß das Mittel zum Verschluß ein Riegel (20) ist, der kippbar am Oberteil der Box (14) befestigt ist und seitwärts auf derselben Seite wie der Behälter vorspringt.

3. Stall nach einem der Anspruch 1 und 2, dadurch gekennzeichnet, daß jede Box (14) einen Anschlag zur Sperrung des Anhebens des Verschlußmittels über seine horizontale Position hinaus aufweist.

4. Stall nach Anspruch 3, dadurch gekennzeichnet, daß das Verschlußmittel (20, 22) im Inneren der Box (14) befestigt ist, welches hohl ist, und in horizontaler Position gegen die Oberwand der letzteren anschlägt.

5. Stall nach einem der Ansprüche 1 bis 4, dadurch gekennzeichnet, daß der Oberteil des Bodens über die ebene Grundplatte (10) gleitet, welche mit dem Gestell (1) einstückig ausgebildet ist.

6. Stall nach einem der Ansprüche 1 bis 5, dadurch gekennzeichnet, daß jede vertikale Platte (14), welche eine Box bildet, an einem Querbalken (12) befestigt ist, der mit dem beweglichen Boden einstückig ausgebildet ist, und daß der Behälter (16), den sie trägt, sich seitlich bis hinter die benachbarte Box erstreckt.

7. Stall nach einem der Ansprüche 1 bis 6, dadurch gekennzeichnet, daß eine querverlaufende Zwischenwand (26, 28) zur Führung der zu melkenden Tiere den Eingang (24) verlängert.

8. Stall nach einem der Ansprüche 1 bis 7, dadurch gekennzeichnet, daß ein Futterverteiler (30) oberhalb des beweglichen Bodens befestigt ist, und zwar oberhalb des ersten Behälters, der in normaler horizontaler Position dargestellt ist.

FIG. 1

FIG. 2

0 168 275